# EUROPEAN PATENT APPLICATION

(11) **EP 4 600 279 A1**
(43) Date of publication of application: **13.08.2025**
(21) Application number: 23875252.1
(22) Date of filing: 06.10.2023
(51) Int. Cl.: C08F 220/44, C08F 220/18, C08F 220/06, C08F 218/08, C08F 216/06, C08K 3/013, C08J 3/12, C08L 33/20, H01M 50/42, H01M 10/0525

(54) **COPOLYMER FOR SEPARATOR AND SECONDARY BATTERY COMPRISING SAME**

(30) Priority: 06.10.2022 KR 20220127830
(71) Applicant: Hansol Chemical Co., Ltd, Seoul 06169 (KR)
(72) Inventor: JANG, Bo-Ok, Wanju-gun, Jeollabuk-do 55321 (KR); LEE, Nam-Joo, Wanju-gun, Jeollabuk-do 55321 (KR); LEE, Go-Eun, Wanju-gun, Jeollabuk-do 55321 (KR); CHO, Seung-Wan, Wanju-gun, Jeollabuk-do 55321 (KR); KIM, Young-Su, Wanju-gun, Jeollabuk-do 55321 (KR); KIM, Jin-Yeong, Wanju-gun, Jeollabuk-do 55321 (KR); NOH, Myeong-Jun, Wanju-gun, Jeollabuk-do 55321 (KR); OH, Sae-Wook, Wanju-gun, Jeollabuk-do 55321 (KR); KWON, Se-Man, Wanju-gun, Jeollabuk-do 55321 (KR)
(74) Representative: Ipsilon Lyon
(86) International application number: PCT/KR2023/015392
(87) International publication number: WO 2024/076191

(57) **Abstract**

The present invention relates to: a copolymer prepared by copolymerizing and hydrolyzing two or more monomers selected from the group consisting of an acrylonitrile-based monomer, an acrylate-based monomer, and an acrylic acid-based monomer with a vinyl acetate-based monomer; and a core-shell particle, a slurry composition, a separator, and a secondary battery which comprise same.

## Description

### Technical Field

The present disclosure relates to a copolymer, a core-shell particle containing the same copolymer, and a slurry composition, a separator, and a secondary battery.

### Background Art

Lithium secondary batteries have a high energy density. Thus, lithium secondary batteries are widely used in the electrical, electronic, communication, and computer industries. The application areas of lithium secondary batteries have expanded from small-sized lithium secondary batteries for portable electronic devices to high-capacity secondary batteries for hybrid vehicles and electric vehicles.

Lithium-ion secondary batteries are insulated by a separator. However, a short circuit between the positive and negative electrodes due to internal or external issues such as battery-cell abnormalities or shocks may occur. Thus, there is a possibility of heat generation and explosion for lithium-ion secondary batteries. Accordingly, securing thermal/chemical safety of a separator is significantly important.

Currently, polyolefin-based films are widely used as separators. However, polyolefin has the disadvantage of severe thermal shrinkage at high temperatures and weak mechanical properties.

To improve stability of these polyolefin-based separators, a porous separator has been developed in which a polyolefin porous substrate film is coated with a mixture of inorganic particles and a binder.

That is, to suppress the thermal shrinkage of polyolefin-based separators caused by high temperature and suppress the instability of batteries caused by dendrites, one or both sides of a porous separator substrate are coated with inorganic particles and a binder. Thereby, the inorganic particles can serve to reduce a shrinkage rate of the substrate, and at the same time, a safer separator can be manufactured through a coated layer.

To ensure excellent battery properties, a coated layer is required to be uniformly coated and at the same time, to have a strong adhesion strength to adhere to a substrate.

Additionally, to respond to recent trends of high capacity and output, there is a need to further improve the heat resistance of conventional separators.

### [Related Art Documents]

### [Patent Documents]

(Patent Document 1) Korean Patent No. 10-1430975
(Patent Document 2) Korean Patent Application Publication No. 10-2006-0072065

### Disclosure

### Technical Problem

Accordingly, the present disclosure seeks to provide a slurry composition with excellent adhesion strength by using a copolymer.

In addition, the present disclosure seeks to provide a separator, which has excellent heat resistance by applying the slurry composition, and a battery with excellent performance and to which the separator is applied.

Through this, it is possible to reduce a defect rate during battery manufacturing and realize batteries with excellent battery resistance and lifespan properties.

However, the problems that the present disclosure seeks to solve are not limited to the problems mentioned above, and other problems not mentioned will be clearly understood by those skilled in the art from the description below.

### Technical Solution

One aspect of the present disclosure provides a copolymer,
which is prepared by copolymerizing and hydrolyzing two or more monomers selected from the group consisting of an acrylonitrile-based monomer, an acrylate-based monomer, and an acrylic acid-based monomer with a vinyl acetate-based monomer.

Another aspect of the present disclosure provides a core-shell particle, including:
a core; and
a shell surrounding the core,
in which the shell contains the copolymer.

A further aspect of the present disclosure provides a slurry composition, including:
the copolymer; and
an inorganic particle.

A yet further aspect of the present disclosure provides a separator, containing:
the slurry composition.

A still yet further aspect of the present disclosure provides a secondary battery, including:
the separator.

### Advantageous Effects

A copolymer of the present disclosure can increase adhesion strength to a polyolefin film, which is a separator substrate, and/or to an electrode, and improve heat resistance of the separator.

In addition, it is possible to reduce a defect rate during battery manufacturing and realize batteries with excellent battery resistance and lifespan properties.

### Best Mode

Hereinafter, the operation and effects of the invention will be described in more detail through specific embodiments of the disclosure. However, these embodiments are merely presented as examples of the present disclosure, and the scope of rights of the present disclosure is not determined by the embodiments.

Prior to this, terms and words used in this specification and claims should not be construed as limited to their ordinary or dictionary meanings. Based on the principle that the inventor(s) can appropriately define the concept of the term to explain his or her invention in the best way, the terms and words are required to be interpreted as meaning and concept consistent with the technical idea of the present disclosure.

Therefore, the configuration of the embodiments described in this specification is only one of the most preferred embodiments of the present disclosure and does not represent the entire technical idea of the present disclosure. It should be understood that at the time of filing this application, there may be various equivalents and modifications that can replace the embodiments.

In this specification, singular expressions include plural expressions, unless the context clearly indicates otherwise. In this specification, terms such as "include", "comprise", or "have" are intended to indicate the presence of implemented features, numbers, steps, components, or combinations thereof. The terms should be understood as not precluding the presence or addition of one or more other features, numbers, steps, components, or combinations thereof.

In this specification, "to" and "~" in "a to b" and "a to b" indicating numerical ranges are defined as ≥ a and ≤ b.

A copolymer according to one aspect of the present disclosure may be prepared by copolymerizing and hydrolyzing two or more monomers selected from the group consisting of an acrylonitrile-based monomer, an acrylate-based monomer, and an acrylic acid-based monomer with a vinyl acetate-based monomer.

The hydrolysis may be alkaline hydrolysis.

In one embodiment, the copolymer may be prepared by copolymerizing and hydrolyzing 35% to 75% by weight of the acrylonitrile-based monomer, 20% to 55% by weight of the acrylate-based monomer, 1% to 10% by weight of acrylic acid-based monomer, and 1% to 15% by weight of vinyl acetate-based monomer.

In another embodiment, based on 100% by weight of the total weight of the copolymer, the copolymer may include 35% to 75% by weight of an acrylonitrile-based monomer unit, 20% to 55% by weight of an acrylate-based monomer unit, 1% to 10% by weight of an acrylic acid-based monomer unit, 1% to 15% by weight of vinyl acetate-based monomer and vinyl alcohol-based monomer units.

Meanwhile, in regard to the 1% to 15% by weight of the vinyl acetate-based monomer and vinyl alcohol-based monomer units, the content of the vinyl alcohol-based monomer unit may exceed 0% by weight.

In other words, the acrylonitrile-based monomer, acrylate-based monomer, acrylic acid-based monomer, and vinyl acetate-based monomer may each independently be copolymerized to form the acrylonitrile-based monomer unit, acrylate-based monomer unit, acrylic acid-based monomer unit, and vinyl acetate-based monomer unit.

In a further embodiment, the acrylonitrile-based monomer may be formed by polymerizing one or more types selected from the group consisting of methacrylonitrile and methyl acrylonitrile.

In a yet further embodiment, the acrylate-based monomer unit may be formed by polymerizing one or more types selected from the group consisting of methyl acrylate, methyl methacrylate, ethyl acrylate, ethyl methacrylate, propyl acrylate, propyl methacrylate, isopropyl acrylate, isopropyl methacrylate, butyl acrylate, butyl methacrylate, sec-butyl acrylate, sec-butyl methacrylate, tert-butyl acrylate, tert-butyl methacrylate, ethyl hexyl acrylate, ethyl hexyl methacrylate, lauryl acrylate, lauryl methacrylate, stearyl acrylate, and stearyl methacrylate.

In addition, the acrylic acid-based monomer unit may be formed, for example, by polymerizing one or more types selected from the group consisting of acrylic acid and methacrylic acid. The vinyl acetate-based monomer unit may be formed by polymerizing vinyl acetate.

Meanwhile, some of the vinyl acetate-based monomer unit may be converted into vinyl alcohol-based monomer unit by the hydrolysis.

The degree of hydrolysis may be adjusted to, for example, 70% or more, 75% or more, 80% or more, 85% or more, 90% or more, or 95% or more.

This means that 70% or more, 75% or more, 80% or more, 85% or more, 90% or more, 95% or more of the vinyl acetate-based monomer unit may be changed into the vinyl alcohol-based monomer unit.

When the acrylonitrile-based monomer unit has a content above or below the content range of the present disclosure, it may cause decreases in dispersibility of polymer particles and inorganic slurry, or cause a decrease in adhesion strength.

When the acrylate-based monomer unit has a content above or below the content range of the present disclosure, it may cause a decrease in adhesion strength.

When the acrylic acid-based monomer unit has a content above or below the content range of the present disclosure, it may cause polymer aggregation and precipitation or a decrease in adhesion strength.

When the vinyl acetate monomer unit has a content above or below the content range of the present disclosure, it may cause stability problems such as a storage stability issue.

When the vinyl alcohol-based monomer unit has a content above or below the content range of the present disclosure, it may cause a decrease in adhesion strength, an increase in viscosity, and an increase in particle size.

In a still yet further embodiment, the acrylic acid-based monomer unit may be combined with an alkali metal, a hydroxide containing the alkali metal, or a combination thereof.

That is, a carboxylate group of the acrylic acid-based monomer unit may be combined with an alkali metal, a hydroxide containing an alkali metal, or a combination thereof.

Meanwhile, the weight ratio of the alkali metal, hydroxide containing the alkali metal, or a combination thereof to the copolymer (the weight of the alkali metal, the hydroxide containing the alkali metal, or a combination thereof: the weight of the copolymer) may be 0.8 to 6.5:100.

When the weight ratio of the alkali metal, hydroxide containing the alkali metal, or combination thereof to the copolymer is above or below the weight ratio of the present disclosure, the adhesive properties of a separator may deteriorate. In particular, the peel adhesion strength and electrode adhesion strength of the separator may decrease.

The adhesion strength of the separator containing the alkali metal, hydroxide containing alkali metal, or a combination thereof may be determined depending on the strength of cohesion and repulsion between elements. Depending on the change in content, the adhesion strength may change due to changes in the superiority or inferiority of strength of cohesion, adhesion, and repulsion.

Meanwhile, enhancement in the adhesion strength to inorganic materials means increased adhesion strength to inorganic materials and substrates. In other words, an increase in the amount of minerals may enhance the heat resistance properties of a separator.

The electrode adhesion strength of the separator may reduce a rate for a defect that occurs when loading electrodes during battery assembly, and at the same time, may minimize void formation, and improve ionic conductivity in an electrolyte solution.

In addition, when a binder layer is laminated alone onto an inorganic-coated layer through coating, electrode adhesion strength may be maximized. Ultimately, the electrode adhesion strength may minimize a battery defect rate and further improve battery performance.

The copolymer of the present disclosure is combined with the alkali metal, hydroxide containing the alkali metal, or a combination thereof, producing an alcohol functional group. This may improve wettability of a copolymer and induce an anchor effect, thereby maximizing adhesion strength.

In a still yet further embodiment, a reaction temperature for combining the copolymer with the alkali metal, hydroxide containing the alkali metal, or a combination thereof may be 40°C to 70°C.

When the reaction temperature is below the range, the adhesive properties and reactivity of a separator may be reduced. In particular, wet electrode adhesion strength may deteriorate.

When the reaction temperature is above the range, side reactions of the copolymer may occur.

In a still yet further embodiment, the copolymer may include a repeated monomer unit represented by Formula 1 below.

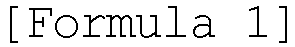

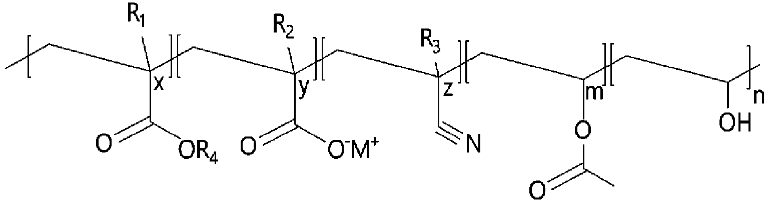

In Formula 1 above,
R₁ to R₃ may each independently be hydrogen, a linear or branched hydrocarbon having 1 to 4 carbon atoms, or a combination thereof. R₄ may be a linear or branched hydrocarbon having 1 to 10 carbon atoms. M may be hydrogen, an alkali metal, a hydroxide containing the alkali metal, or a combination thereof. x, y, z, m, and n may satisfy an equation of x+y+z+m+n=1.

x, y, z, m, and n in Formula 1 correspond to a weight fraction of each monomer unit. The sum of the weight fractions of each monomer unit is 1.

In a still yet further embodiment, R₁ to R₃ in Formula 1 may each independently include one or more selected from the group consisting of hydrogen, methyl, and ethyl.

In addition, R₄ in Formula 1 may include one or more selected from the group consisting of methyl, ethyl, n-propyl, iso-propyl, n-butyl, tert-butyl, n-pentyl, n-hexyl, n-heptyl, n-octyl, 2-ethylhexyl, n-nonyl, and n-decyl.

Meanwhile, M in Formula 1 may be Li, Na, or K, but is not limited thereto.

In a still yet further embodiment, the copolymer may be a random or block copolymer depending on a synthesis process.

In a still yet further embodiment, the number average molecular weight of the copolymer may be 5,000 to 1,000,000.

When the number average molecular weight of the copolymer is less than 5,000, the fluidity of the copolymer may increase, resulting in reduced dispersibility and deterioration of the heat resistance properties of a separator. When the number average molecular weight exceeds 1,000,000, the viscosity may be too high to be used, and the pores of a separator may be blocked, reducing air permeability and resistance.

In a still yet further embodiment, the copolymer may further include 0.1 to 3 parts by weight of a crosslinking monomer, based on 100 parts by weight of the copolymer.

The crosslinking monomer may include one or more selected from the group consisting of divinylbenzene, aliphatic difunctional methacrylate, and aromatic difunctional methacrylate.

Core-shell particles according to another aspect of the present disclosure each may include a core and a shell surrounding the core, and the shell may include the copolymer.

Preferably, the average particle diameter of the core may be 50 to 250 nm, and the average particle diameter of the final core-shell particles may be 300 to 1000 nm.

When the cores are not used, the particle shape may collapse due to absence of a hard and durable structure, and as film formation progresses, the pores of the separator may be blocked, thereby reducing air permeability and resistance.

This is because when durability is not provided through the cores, the pores of the separator may be blocked as film formation progresses, which may also cause problems in electrode adhesive layer coating.

In a still yet further embodiment, the core may be a polymer containing an acrylate-based monomer unit, an acrylic acid-based monomer unit, or a combination thereof, but is not limited thereto. Additionally, the core particle may be cross-linked.

For example, based on 100% by weight of the total weight of all acrylate-based monomer unit and acrylic acid-based monomer unit, the cores may include a copolymer containing 90% to 98% by weight of the acrylate-based monomer unit and 2% to 10% by weight of the acrylic acid-based monomer unit.

When the content of each monomer unit of the copolymer of the cores is higher or lower than the range, reaction stability or durability of the cores may decrease.

A slurry composition according to a further aspect of the present disclosure may include the copolymer and inorganic particles.

That is, the slurry composition may include core-shell particles in which the copolymers are included in the shells.

The inorganic particles may be used without limitation as long as they are insulating particles, and may preferably be insulating particles with high dielectric constant.

Specific examples of the inorganic particles may include any one selected from the group consisting of Al₂O₃, SiO₂, TiO₂, ZrO₂, ZnO, NiO, CaO, SnO₂, Y₂O₃, MgO, BaTiO₃, CaTiO₃, SrTiO₃, SiC, Li₃PO₄, Pb(Zr,Ti)O₃(PZT), (Pb, La) (Zr,Ti)O₃(PLZT), AlOOH, and a combination thereof.

There is no particular limitation on the size of the inorganic particles, but for example, the average particle diameter may be 0.01 µm to 30 µm, more preferably 0.1 µm to 10 µm. When the average particle diameter of the inorganic particles is below the desirable range, dispersibility may become low. When the average particle diameter of the inorganic particles exceeds the preferred range, the thickness of the coated layer may become large after coating, and the mechanical properties may deteriorate.

Additionally, the shape of the inorganic particles is not particularly limited, and may be, for example, spherical, oval, or irregularly shaped.

A separator according to a yet further aspect of the present disclosure may include the slurry composition.

A separator coating layer containing the copolymers is suitable for single-layered coating or multi-layered coating. As an example, when the single-layered coating is performed with inorganic particles, the cohesion strength of the inorganic particles and the electrode adhesion strength may be improved depending on the content.

When multi-layered coating is performed by coating the inorganic particle coating layer with a binder alone, electrode adhesion strength may be improved.

A separator may be manufactured by coating at least one side of a porous substrate film with the slurry composition, or by preparing the slurry composition in the form of a film and laminating it onto a porous substrate film.

Meanwhile, the separator may be used as a separator for secondary batteries, for example, as a separator for lithium secondary batteries.

For example, separator manufacturing may be performed by (a) preparing a polymer solution by dissolving or dispersing the copolymers in a solvent; (b) adding and mixing inorganic particles to the polymer solution of the step a); and (c) coating with the mixture of the step b) and drying at least one region selected from the group consisting of a surface of the polyolefin-based separator substrate and a portion of pores in a substrate.

First, 1) copolymers are made and prepared in the form of a polymer solution by being dissolved or dispersed in an appropriate organic solvent.

The solvent preferably has a solubility index similar to that of the copolymers used as binders and has a low boiling point. This is to facilitate uniform mixing and subsequent solvent removal. Non-limiting examples of the solvent applicable include acetone, tetrahydrofuran, methylene chloride, chloroform, dimethylformamide, N-methyl-2-pyrrolidone (NMP), cyclohexane, water, or mixtures thereof. The solvent may be more preferably used in a water-dispersed state.

2) An inorganic particle/polymer mixture is prepared by adding and dispersing inorganic particles to the prepared polymer solution.

It is preferable to perform a dispersion process of the polymer solution and inorganic particles. At this time, the appropriate dispersion time may be 10 minutes to 5 hours. Conventional methods may be used as the dispersion method, and the ball mill method is particularly preferable.

There are no major limitations on a composition of the mixture of the inorganic particles and polymers. However, the thickness, pore size, and porosity of a finally prepared organic/inorganic composite porous separator of the present disclosure may be adjusted depending on the composition.

In other words, as a ratio of inorganic particles (I) to polymers (P) (ratio = I/P) increases, the porosity of a separator increases. This results in an increase in the thickness of the separator at the same solid content (inorganic particle weight + polymer weight). In addition, possibility of pore formation between inorganic particles increases, increasing pore size. At this time, as the size (particle diameter) of the inorganic particles increases, an interstitial distance between the inorganic materials increases, so the pore size increases.

3) The prepared inorganic particle/polymer mixture is applied onto a prepared polyolefin-based separator substrate for coating and then dried. Thereby, a separator of the present disclosure may be obtained.

In this case, a coating method with the inorganic particle/polymer mixture onto a polyolefin-based separator substrate may be a conventional coating method known in the art. Various coating methods, such as bar coating, dip coating, die coating, roll coating, comma coating, gravure coating, or a combination thereof may be used. In addition, when coating a polyolefin-based separator substrate with the inorganic particle/polymer mixture, a coating may be applied to both sides of the separator substrate or may be selectively applied to only one side thereof.

When the separator is used in a secondary battery, lithium ions may be transferred not only through the separator substrate but also through a porous active layer, as well as when an internal short circuit occurs due to an external impact, the safety improvement effect described above may be achieved.

Additionally, the secondary battery may include a positive electrode, a negative electrode, a separator interposed between the positive electrode and the negative electrode, and an electrolyte solution.

The secondary battery may be manufactured according to a common method known in the art. For example, a secondary battery is manufactured by assembling electrodes and a separator, and then injecting an electrolyte solution into the assembly.

There is no significant limitation on an electrode to be applied with the separator, but a positive electrode active material may be any common positive electrode active material applicable in the positive electrode of a secondary battery. Non-limiting examples of the positive electrode active material include lithium intercalation materials, such as lithiated magnesium oxide, lithiated cobalt oxide, lithiated nickel oxide, or composite oxides formed from their combinations. In addition, a negative electrode active material may be a common negative electrode active material applicable in a negative electrode of a conventional electrochemical device. Non-limiting examples of the negative electrode active material include lithium metal, lithium alloys, and lithium intercalation materials such as carbon, petroleum coke, activated carbon, graphite, or other carbon-based materials. The two electrodes on both sides are formed by binding the above-described two positive and negative electrode active materials to their corresponding current collectors which are a positive electrode current collector (i.e., a foil made of aluminum, nickel, or a combination thereof) and a negative electrode current collector (i.e., a foil made of copper, gold, nickel, or copper alloy, or a combination thereof), respectively.

The electrolyte is a salt with the same structure as A+B-. A+ includes alkali metal cations such as Li+, Na+, K+, or ions made of a combination thereof. B- includes anions such as PF₆-, BF₄-, Cl-, Br-, I-, ClO₄-, AsF₆-, CH₃CO₂-, CF₃SO₃-, N(CF₃SO₂)₂-, and C(CF₂SO₂)₃-, or ions made of a combination thereof. It is preferable that the A+B- salt is dissolved and dissociated in an organic solvent, such as propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma butyrolactone (GBL), or mixtures thereof.

In addition to the general winding process, processes for applying the separator to a battery may include laminating and folding of the separator and electrodes.

### Mode for Disclosure

Hereinafter, the present disclosure will be described in more detail using examples, but the present disclosure is not limited thereto.

### [Preparation Example 1] Preparation of Copolymers

### Core Particle Preparation

0.1 to 3 parts by weight of a nonionic emulsifier based on 100 parts by weight of monomer mixture (A) and 370 parts by weight of distilled water were added to a reaction vessel and stirred. While high-purity nitrogen gas was injected into the reaction vessel, the temperature was raised to 83°C.

0.1 to 3 parts by weight of ammonium persulfate, a decomposition initiator, was added to the reaction vessel prepared at 83°C based on 100 parts by weight of the monomer mixture (A). To the reaction vessel, a crosslinking monomer was added to induce a continuous emulsion polymerization reaction. As a result, core particles were prepared.

The monomer mixture (A) included a monomer of acrylic acid (AA) and methyl methacrylate (MMA).

Meanwhile, the contents of the monomer of the acrylic acid (AA), methyl methacrylate (MMA), and crosslinking monomer were adjusted to 96.5% by weight, 2.5% by weight and 1% by weight, respectively, based on 100% by weight of the total weight of the monomer of the acrylic acid (AA), methyl methacrylate (MMA) and crosslinking monomer.

### Core-shell Particle Preparation

0.05 to 2 parts by weight of an emulsifier, and 2.0 parts by weight of the prepared core particles, based on 100 parts by weight of monomer mixture (B) and 235 parts by weight of distilled water were added to a reaction vessel and stirred. While high-purity nitrogen gas was injected into the reaction vessel, the temperature was raised to 65°C. 0.15 parts by weight of ammonium persulfate, a decomposition initiator, was added to the reaction vessel prepared at 65°C based on 100 parts by weight of the monomer mixture (B) to induce a continuous emulsion polymerization reaction. As a result, core particles were prepared.

Meanwhile, the core particles might be used in an amount of 0.1 to 10 parts by weight based on 100 parts by weight of the monomer mixture.

Afterward, a surface was treated for a certain period of time by adding an adjusted amount of metal hydroxide (NaOH, LiOH, or KOH) at a controlled temperature. Through this, surface functional groups of the shells were changed. That is, a carboxylic acid moiety present in the shells was ionized.

The monomer mixture (B) was adjusted to have acrylonitrile monomer (AN), acrylic acid monomer (AA), butyl acrylate (BA), and vinyl acetate (Vac) in an amount of 42% by weight, 8% by weight, 40% by weight, and 10% by weight, respectively.

In addition, the monomer mixture (B) further included 2.0 parts by weight of a crosslinking monomer (divinylbenzene) based on 100 parts by weight of the total weight of the monomer mixture (B) .

The prepared core-shell particles were used as a binder.

### [Preparation Example 2] Preparation of Slurries for Porous Film Coating

Inorganic particles (alumina, average particle diameter 0.4 µm) and core-shell particles (binders) prepared in Preparation Example 1 were mixed at a solid weight ratio of 80:20. Thereafter, additives, such as dispersants and surface tension relievers, and additional distilled water were added thereto and mixed so that the solids concentration became 35% by weight. This mixture was sufficiently dispersed by a ball mill method or with a mechanical stirrer to prepare slurries.

### [Preparation Example 3] Preparation of Separators

The slurries for porous film coating prepared in Preparation Example 2 were applied to a polyolefin (thickness: 11 µm) porous substrate (polyethylene (PE) and polypropylene (PP)) to form inorganic coating layers. Various coating methods might be used, such as dip coating, die coating, gravure coating, and comma coating.

In addition, after coating, drying was performed by methods such as warm air, hot air, vacuum drying, and infrared drying, and a drying temperature range was 50°C to 80°C.

The thickness of the inorganic coating layer was 1 to 6 µm on one side or both sides. When the thickness was less than 1 µm, the heat resistance of the separators was significantly reduced, and when the thickness was more than 6 µm, the thickness of the separators was too large, which might reduce energy density of batteries and increase resistance.

### [Examples 1 to 4 and Comparative Examples 1 to 3]

To change the surface functional groups of the shells of the core-shell particles of Preparation Example 1, products for Examples 1 to 4 and Comparative Examples 1 to 3 were prepared according to Preparation Example 1 by adjusting the content of the metal hydroxide used and the reaction temperature with the metal hydroxide as shown in Table 1 below.

Using the binder copolymers prepared in Examples 1 to 4 and Comparative Examples 1 to 3, slurries for porous film coating and separators were prepared according to Preparation Example 2 and Preparation Example 3, respectively.

**[Table 1]**

| Division | Metal hydroxide weight ratio | Reaction temperature |
|---|---|---|
| Example 1 | 2 | 50°°C |
| Example 2 | 3 | 50°C |
| Example 3 | 4 | 50°C |
| Example 4 | 4 | 60°C |
| Comparative Example 1 | 0.7 | 50°C |
| Comparative Example 2 | 4 | 25°C |
| Comparative Example 3 | 7 | 50°C |

The weight ratio of the metal hydroxide in Table 1 represents the weight part of the metal hydroxide added based on 100 parts by weight of the copolymers constituting the shells of the core-shell particles to change the surface functional groups of core-shell particles.

For example, the weight ratio of Example 1 indicates that the surface functional groups of the core-shell particles were changed by adding 2 parts by weight of metal hydroxide to 100 parts by weight of the copolymers constituting the shells of the core-shell particles.

### [Evaluation Example 1] Average Diameter and Glass Transition Temperature of Core-shell Particles

Average particle diameters of the core-shell particles of Examples 1 to 4 and Comparative Examples 1 to 3 were analyzed using a Particle Size analyzer (product name: Z3000, manufacturer: Nicomp).

Glass transition temperature was analyzed by placing 10 to 20 mg of the core-shell particles of Examples 1 to 4 and Comparative Examples 1 to 3 in a 40 µl aluminum pan, and then confirming the thermal behaviors of the core-shell particles using a differential scanning calorimeter (DSC).

### [Evaluation Example 2] Adhesion Strength of Slurries for Porous Film Coating

A tape of 18 mm in width and 30 mm or more in length was attached to each of the separators prepared according to Preparation Example 3 using the core-shell particles (binders) of Examples 1 to 4 and Comparative Examples 1 to 3. Thereafter, the taping portion of each of the separators was lightly pressed 5 times with a hand roller.

The prepared specimens were mounted on a UTM (1 kgf load cell), one part of the separators was fixed to an upper clip of a tensile strength machine, and the tape attached to one side of the separators was fixed to a lower clip. Then, the 180° peel strength was measured at a speed of 100 mm/min. Five or more specimens per sample were prepared and measured, and the average values were calculated.

### [Evaluation Example 3] Dry Electrode Adhesion Strength of Separators

The separators prepared according to Preparation Example 3 using the core-shell particles (binders) of Examples 1 to 4 and Comparative Examples 1 to 3 were cut to 20 mm in width and 70 mm in length.

After placing electrodes cut to 25 mm in width and 70 mm in length on the prepared separators, a temperature of 65°C and a pressure of 65kg/cm² were applied for 30 seconds using a hot press.

The prepared specimens were mounted on a UTM (1 kgf load cell), one part of the separators was fixed to an upper clip of a tensile strength machine, and the tape attached to one side of the separators was fixed to a lower clip. Then, the 180° peel strength was measured at a speed of 100 mm/min. Five or more specimens per sample were prepared and measured, and the average values were calculated.

### [Evaluation Example 4] Wet Electrode Adhesion Strength of Separators

The separators prepared according to Preparation Example 3 using the core-shell particles (binders) of Examples 1 to 4 and Comparative Examples 1 to 3 were cut to 20 mm in width and 70 mm in length.

After placing electrodes cut to 25 mm in width and 70 mm in length on the prepared separators, they were sealed and left for electrolyte solution impregnation at room temperature for 12 hours, and then a temperature of 65°C and a pressure of 65kg/cm² were applied for 30 seconds using a hot press.

The prepared specimens were mounted on a UTM (1 kgf load cell), one part of the separators was fixed to an upper clip of a tensile strength machine, and the tape attached to one side of the separators was fixed to a lower clip. Then, the 180° peel strength was measured at a speed of 100 mm/min. Five or more specimens per sample were prepared and measured, and the average values were calculated.

### [Evaluation Example 5] Change in Air Permeability of Separators

The time (in seconds) required for 100 cc of air to pass through with the use of the separators prepared according to Preparation Example 3 using the core-shell particles (binders) of Examples 1 to 4 and Comparative Examples 1 to 3 was measured using a gas permeability tester.

Meanwhile, a change in air permeability represents a value obtained by subtracting a value for air permeability of an uncoated polyolefin separator from a value for air permeability of the separators prepared according to Preparation Example 3 using the core-shell particles (binders) of Examples 1 to 4 and Comparative Examples 1 to 3.

The particle sizes and glass transition temperatures (Tg) of the core-shell particles of Examples 1 to 4 and Comparative Examples 1 to 3, measured in Evaluation Example 1, are shown in Table 2 below.

**[Table 2]**

| Core-shell particles | Particle size (nm) | Tg (°C) |
|---|---|---|
| Example 1 | 450 | 36.5 |
| Example 2 | 460 | 36.3 |
| Example 3 | 470 | 36.7 |
| Example 4 | 480 | 36.6 |
| Comparative Example 1 | 460 | 36.7 |
| Comparative Example 2 | 480 | 36.4 |
| Comparative Example 3 | 720 | 36.8 |

As shown in Table 2, the average diameters of the core-shell particles of Examples 1 to 4 were measured to be 450 to 480 nm.

It was confirmed that, as the content of the metal hydroxide, which had reacted to change the surface functional groups of core-shell particles, increased and the reaction temperature increased, the average diameters of core-shell particles increased.

The glass transition temperature of the core-shell particles of Examples 1 to 4 was measured to be 36.3°C to 36.7°C.

It was confirmed that the glass transition temperature remained relatively constant despite changes in the content of the metal hydroxide.

In particular, the core-shell particles (binders) of Comparative Example 3 containing an excessive amount of the metal hydroxide had a significantly large average diameter. This was because when an excess amount of metal hydroxide was included, all of the carboxylic acid in the core-shell particles (binders) was replaced with carboxylate.

Peel adhesion strength and electrode adhesion strength (dry and wet) of the separators prepared according to Preparation Example 3 using the core-shell particles of Examples 1 to 4 and Comparative Examples 1 to 3, measured in Evaluation Examples 2 to 4, are shown in Table 3 below.

**[Table 3]**

| Core-shell particles | Peel adhesion (gf/mm) | Electrode adhesion (gf/mm) | |
|---|---|---|---|
| | | Dry | Wet |
| Example 1 | 0.05 | 0.18 | 0.40 |
| Example 2 | 0.08 | 0.33 | 0.65 |
| Example 3 | 0.11 | 0.44 | 1.30 |
| Example 4 | 0.15 | 0.85 | 1.00 |
| Comparative Example 1 | 0.01 | 0.08 | 0.02 |
| Comparative Example 2 | 0.10 | 0.45 | 0.34 |
| Comparative Example 3 | 0.00 | 0.00 | 0.00 |

As shown in Table 3 above, the peel adhesion strength of the separators prepared according to Preparation Example 3 using the core-shell particles (binders) of Examples 1 to 4 was within the range of 0.02 to 0.2 gf/mm. The dry electrode adhesion strength of the separators was in the range of 0.1 to 1 gf/mm. The wet electrode adhesion strength of the separators was in the range of 0.3 to 1.5 gf/mm.

Meanwhile, the separators prepared according to Preparation Example 3 using the core-shell particles (binders) of Examples 1 to 4 showed strong peel adhesion strength compared to separators prepared according to Preparation Example 3 using the core-shell particles (binders) of Comparative Examples 1 and 3.

It was confirmed that the peel adhesion strength increased as the content of the metal hydroxide used increased and the reaction temperature with the metal hydroxide increased.

This was because the vinyl acetate-based monomer used during the production of core-shell particles (binders) had relatively low reactivity when polymerized with acrylate-based monomer, so the vinyl acetate-based monomer was mainly placed on the surface of the particles, and some functional groups of the vinyl acetate-based monomer unit on the surfaces of the core-shell particles (binders) were converted to alcohol through the addition of the metal hydroxide, thereby enhancing adhesion strength and wettability.

However, it was confirmed that when using the core-shell particles (binders) of Comparative Example 3 containing an excessive amount of the metal hydroxide, peel adhesion strength was substantially lost. This was because when the excessive amount of the metal hydroxide was added, the carboxylic acid in the core-shell particles (binders) was completely replaced with carboxylate, causing a decrease in adhesion strength.

Likewise, enhancement in electrode adhesion strength (dry and wet) was confirmed as the content of the metal hydroxide used increased.

On the other hand, it was confirmed that the separator prepared according to Preparation Example 3 using the core-shell particles (binders) of Comparative Example 2, in which a reaction temperature was low, showed a significant decrease in wet electrode adhesion strength compared to the separators prepared according to Preparation Example 3 using the core-shell particles (binders) of Examples 3 and 4, in which the same amount of the metal hydroxide reacted and a reaction temperature was high.

This was because as the reaction temperature increased, the hydrolysis reaction accelerated. In other words, the hydrolyzed core-shell particles (binders) might show strong adhesion strength by forming hydrogen bonds with oxide layers on the outermost surfaces of the inorganic materials.

Amounts of change in air permeability of the separators prepared according to Preparation Example 3 using the core-shell particles of Examples 1 to 4 and Comparative Examples 1 to 3, measured in Evaluation Example 5, are shown in Table 4 below.

**[Table 4]**

| Core-shell particles | Amount of change in air permeability (sec/100ml) |
|---|---|
| Example 1 | Δ3 |
| Example 2 | Δ11 |
| Example 3 | Δ13 |
| Example 4 | Δ26 |
| Comparative Example 1 | Δ0.5 |
| Comparative Example 2 | Δ28 |
| Comparative Example 3 | Δ36 |

As shown in Table 4, the amounts of change in air permeability of the separators prepared according to Preparation Example 3 using the core-shell particles (binders) of Examples 1 to 4 were within the range of △1 sec/100cc to 26 sec/100cc.

As the content of the metal hydroxide used increased, the amounts of change in air permeability tended to increase.

On the other hand, when using the core-shell particles (binders) of Comparative Example 3 containing the excessive amount of the metal hydroxide, the amount of change in air permeability became very large. This is presumed to be related to the increase in the average diameter of the core-shell particles (binders) of Comparative Example 3.

In addition, it was confirmed that the separator prepared according to Preparation Example 3 using the core-shell particles (binders) of Comparative Example 2, in which a reaction temperature was low, showed an increase in the amount of change in air permeability compared to the separators prepared according to Preparation Example 3 using the core-shell particles (binders) of Examples 3 and 4, in which the same amount of the metal hydroxide reacted and a reaction temperature was high.

Consequently, the separators prepared using the core-shell particles (binders) of Examples had excellent substrate and/or electrode adhesion strength and a control ability in air permeability.

In addition, it was confirmed that due to the excellent adhesion strength and heat resistance of the core-shell particles (binders) of Examples, it was possible to reduce a defect rate during battery manufacturing and to realize separator properties which were beneficial to maintaining battery resistance and lifespan.

The scope of the present disclosure is indicated by the claims described later rather than the detailed description above. The meaning and scope of the patent claims, and all changes or modified forms derived from the equivalent concept thereof, should be construed as being included in the scope of the present disclosure.

### Industrial Applicability

A copolymer of the present disclosure can increase adhesion strength to a polyolefin film, which is a separator substrate, and/or to an electrode, and improve heat resistance of the separator.

In addition, it is possible to reduce a defect rate during battery manufacturing and realize batteries with excellent battery resistance and lifespan properties.

## Claims

1. A copolymer, prepared by copolymerizing and hydrolyzing two or more monomers selected from the group consisting of an acrylonitrile-based monomer, an acrylate-based monomer, and an acrylic acid-based monomer with a vinyl acetate-based monomer.

2. The copolymer of Claim 1, prepared by copolymerizing and hydrolyzing 35% to 75% by weight of the acrylonitrile-based monomer, 20% to 55% by weight of the acrylate-based monomer, 1% to 10% by weight of the acrylic acid-based monomer, and 1% to 15% by weight of the vinyl acetate series monomer.

3. The copolymer of Claim 1, wherein the copolymer comprises 35% to 75% by weight of an acrylonitrile-based monomer unit, 20% to 55% by weight of an acrylate-based monomer unit, 1% to 10% by weight of an acrylic acid-based monomer unit, and 1% to 15% by weight of vinyl acetate-based monomer and vinyl alcohol-based monomer units, based on 100% by weight of total copolymer weight,
(wherein, the content of the vinyl alcohol-based monomer unit exceeds 0% by weight).

4. The copolymer of Claim 3, wherein the acrylic acid-based monomer unit is combined with an alkali metal, a hydroxide containing the alkali metal, or a combination thereof.

5. The copolymer of Claim 4, wherein the weight ratio of the alkali metal, the hydroxide containing the alkali metal, or a combination thereof to the copolymer (the weight of the alkali metal, the hydroxide containing the alkali metal, or a combination thereof:the weight of the copolymer) is 0.8 to 6.5:100.

6. The copolymer of Claim 4, wherein a reaction temperature for combining the copolymer with the alkali metal, the hydroxide containing the alkali metal, or a combination thereof is 40°C to 70°C.

7. The copolymer of Claim 1, wherein the copolymer comprises a repeated monomer unit represented by Formula 1 below, 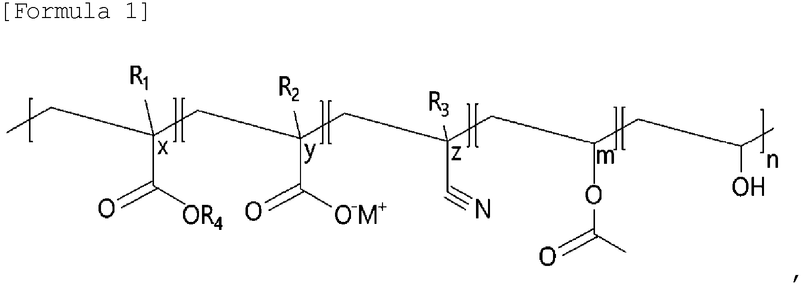 wherein in Formula 1 above,
R₁ to R₃ are each independently hydrogen, a linear or branched hydrocarbon having 1 to 4 carbon atoms, or a combination thereof,
R₄ is a linear or branched hydrocarbon having 1 to 10 carbon atoms,
M is hydrogen, an alkali metal, a hydroxide containing the alkali metal, or a combination thereof, and
x, y, z, m, and n satisfy an equation of x+y+z+m+n=1.

8. The copolymer of Claim 7, wherein R1 to R3 in Formula 1 each independently comprise one or more selected from the group consisting of hydrogen, methyl, and ethyl, and
R₄ in Formula 1 comprises one or more selected from the group consisting of methyl, ethyl, n-propyl, iso-propyl, n-butyl, tert-butyl, n-pentyl, n-hexyl, n-heptyl, n-octyl, 2-ethylhexyl, n-nonyl, and n-decyl.

9. The copolymer of Claim 1, wherein the copolymer is a random or block copolymer.

10. The copolymer of Claim 1, wherein the copolymer further comprises 0.1 to 3 parts by weight of a crosslinking monomer, based on 100 parts by weight of the copolymer.

11. A core-shell particle, comprising:
a core; and
a shell surrounding the core,
wherein the shell comprises the copolymer of any one of claims 1 to 10.

12. The core-shell particle of Claim 11, wherein the core comprises a polymer containing an acrylate-based monomer unit and an acrylic acid-based monomer unit, or a combination thereof.

13. A slurry composition, comprising:
the copolymer of any one of claims 1 to 10; and
an inorganic particle.

14. A separator, comprising the slurry composition of Claim 13.

15. A secondary battery, comprising the separator of Claim 14.
